# EUROPÄISCHE PATENTSCHRIFT

(11) **EP 2 087 030 B1**
(45) Veröffentlichungstag und Bekanntmachung des Hinweises auf die Patenterteilung: **05.01.2011**
(21) Anmeldenummer: 07801947.8
(22) Anmeldetag: 29.08.2007
(51) Int. Cl.: C08J 11/00, C08J 11/06, C08J 11/08, C08L 67/00, C08L 67/04

(54) **VERFAHREN UND VORRICHTUNG ZUR VERWERTUNG VON SAUERSTOFFHALTIGEN POLYMEREN**
PROCESS AND APPARATUS FOR UTILIZING OXYGEN-CONTAINING POLYMERS
PROCÉDÉ ET DISPOSITIF D'UTILISATION DE POLYMÈRES CONTENANT DE L'OXYGÈNE

(30) Priorität: 30.08.2006 DE 102006040662
(43) Veröffentlichungstag der Anmeldung: 12.08.2009
(73) Patentinhaber: PAC Holding S.A., 3980 Wickrange (LU)
(72) Erfinder: ROLLINGER, Guy, 3980 Wickrange (LU); KEMPF, Armin, 55234 Wendelsheim (DE)
(74) Vertreter: Fichter, Robert Arno
(86) Internationale Anmeldenummer: PCT/EP2007/007525
(87) Internationale Veröffentlichungsnummer: WO 2008/025521

(56) Entgegenhaltungen:
- WO-A-96/29118
- DE-A1- 19 712 521
- GB-A- 260 620
- US-A- 3 252 773
- US-B1- 6 488 728

## Beschreibung

Die Erfindung betrifft ein Verfahren zur Umsetzung von sauerstoffhaltigen Polymeren gemäss Anspruch 1, und eine Vorrichtung zur Durchführung des Verfahrens gemäss Anspruch 22.

Die Erfindung betrifft ein Verfahren und eine Vorrichtung zur Verwertung von sauerstoffhaltigen Polymeren durch Umsetzung von sauerstoffhaltigen Polymeren mit Alkalihydroxid unter Bildung von Wasserstoff und Alkalicarbonaten, wobei diese Umsetzung zur Entsorgung und Aufarbeitung der Polymeren als auch der Gewinnung von wichtigen Rohstoffen dienen soll. Die umzusetzenden sauerstoffhaltigen Polymere können synthetisch hergestellt worden sein. Es können auch Polymere auf natürlicher Basis sein.

Polymere, die Kohlenstoff-, Wasserstoff , Sauerstoffatome und ggf, noch andere Atome enthalten, kommen in der Natur vor und liegen auch als synthetische Produkte in vielfältiger Form vor.

So sind eine Vielzahl von Gebrauchsartikeln weitgehend aus Kunststoffen, die aus solchen Polymeren bestehen, hergestellt oder enthalten diese zumindestens in einem beachtlichen Umfang. Textilien werden aus synthetischen, natürlichen oder Regeneratfasern, d. h. aus solchen Polymeren hergestellt. Polymere dieser Art finden sich auch in nachwachsenden Rohstoffen.

Sehr häufig stellt sich das Problem der Entsorgung dieser Polymere oder das Aufarbeiten dieser Polymere, um die Ausgangsstoffe, aus denen diese Polymere entstanden sind, zurück zu gewinnen.

Die einfachste Art der Entsorgung ist das Verbrennen dieser Polymere oder das Lagern auf einer Mülldeponie. Beim Verbrennen kann zwar die dabei gewonnene Energie genutzt werden, jedoch stellen die Abgase eine Belastung für die Umwelt dar und müssen somit auf zum Teil komplizierte und kostspielige Weise unschädlich gemacht werden. Dabei lässt es sich jedoch nicht ganz vermeiden, dass dabei ein Teil der Gase, insbesondere das Klima schädigende CO₂, in die Atmosphäre gelangt.

Verfahren, die das Zerlegen der Polymere in die einzelnen Bestandteile, aus denen sie aufgebaut sind, betreffen, führen zwar zu entsprechenden Rohstoffen, die aber meistens nicht die Qualität besitzen, welche die originären Rohstoffe hatten, d. h. bei der erneuten Herstellung der entsprechenden Polymere werden Produkte minderer Qualität erhalten. Außerdem ist eine entsprechende Aufarbeitung, z. B. Glycolyse oder Hydrolyse verfahrensmäßig sehr aufwendig.

Es sind auch schon Verfahren bekannt geworden, bei denen kohlenwasserstoffhaltige und/oder halogenierte Abfallprodukte insbesondere auch Kunststoffe wie Polyethylen, Polypropylen usw. durch Umsetzung in einer Hydroxidschmelze entsorgt werden. Dieses in der EP 0 991 734 B1 beschriebene Verfahren soll bei einer Temperatur von 580° bis 900°C arbeiten. Dabei werden primär gasförmige Stoffe wie Wasserstoff und Methan gebildet.

Bei der dort beschriebenen Umsetzung können auch Metallhydride entstehen, was die Handhabung des Verfahrens kompliziert. Außerdem liegt bei niedrigeren Temperaturen die Wasserstoffmenge unterhalb des erreichbaren Maximums.

In der US PS 6 607 707 B2 wird ein Verfahren beschrieben, bei der Wasserstoffgas durch die Umsetzung von Kohlenwasserstoffen oder oxidierten Kohlenwasserstoffverbindungen mit einem Alkalihydroxid erzeugt wird. Umgesetzt werden gemäß dem dort beschriebenen Verfahren niedermolekulare Substanzen. Aus der Beschreibung ist ersichtlich, dass nur monomere Substanzen wie Methanol, Ethanol, Formaldehyd und dergleichen eingesetzt werden. Das Verfahren arbeitet im übrigen vorzugsweise in Gegenwart von Wasser und Katalysatoren.

Hinweise, Polymere in einer Art und Weise zu verwerten, wie es die Erfindung tut, sind dieser Druckschrift nicht zu entnehmen. Auch findet der Durchschnittsfachmann in dieser Druckschrift keine Anregungen für ein industriell durchzuführendes Verfahren insbesondere im kontinuierlichen Maßstab.

In der US PS 3 252 773 wird die Vergasung von kohlenstoffhaltigen Materialien unter Einwirkung von Dampf und Sauerstoff beschrieben. Bei der Umsetzung können auch Alkalihydroxide zugegen sein.

In der US Patentanmeldung US 2005/0163704 A1 wird die Umsetzung verschiedener kohlenstoff-, Wasserstoff- und sauerstoff-enthaltender Verbindungen u. a. von Kohlehydraten beschrieben. Bei dieser Reaktion steht die Herstellung von Wasserstoffgas im Mittelpunkt, jedoch wird bei der Reaktion auch Wasser mitverwendet. Ein Verfahren, wie es die Erfindung offenbart, ist dieser Druckschrift nicht zu entnehmen.

Obwohl schon Verfahren bekannt sind, aus Polymeren, die Kohlenstoff-, Wasserstoff- und Sauerstoffatome enthalten, wasserstoffhaltige Gase herzustellen, besteht noch ein Bedürfnis nach einem verbesserten Verfahren, das wirtschaftlich arbeitet, mit dem ein breites Spektrum von Polymeren verarbeitet werden kann, und das insbesondere kontinuierlich durchgeführt werden kann und das reststoffarm, umweltfreundlich und energieeffizient arbeitet.

Das Verfahren zur Umsetzung von sauerstoffhaltigen Polymeren ist in Anspruch 1 definiert, und die Vorrichtung zur Durchführung des, Verfahrens ist in Anspruch 22 definiert.

Aufgabe der Erfindung ist es somit, ein Verfahren zur Herstellung von Wasserstoff und Alkalicarbonaten durch Umsetzung von Polymeren, welche Kohlenstoff-, Wasserstoff- und Sauerstoffatome sowie ggf. noch weitere Atome enthalten, mit Alkalihydroxiden zur Verfügung zu stellen, das umweltfreundlich und energiesparend arbeitet, das eine möglichst quantitative Umsetzung des Polymers in Wasserstoff und Alkalicarbonat möglich macht und bei dem das entstehende Gas im Wesentlichen nur aus Wasserstoff besteht, der direkt in vielfältiger Weise eingesetzt werden kann, z. B. in chemischen Reaktionen oder zur Energiegewinnung, und bei dem das gewonnene Alkalicarbonat als Industrierohstoff verwertet wird, oder auch innerhalb des Verfahrens wiederverwertbar ist, z. B. durch Umsetzen mit Ca(OH)₂ zum ursprünglichen Alkalihydroxid.

Eine weitere Aufgabe der Erfindung ist es, ein Verfahren zur Verfügung zu stellen, das einerseits selbst keine Umwelt schädigenden Gase erzeugt und das den im Polymer enthaltenden Kohlenstoff, der normaler Weise bei den meisten bekannten Verfahren als CO₂ in die Atmosphäre gelangt, bindet und somit auch zur Reduzierung des CO₂ Gehalts in der Atmosphäre beiträgt, und das weniger Energie verbraucht, als es selbst liefert und das somit auch zum Wärmerückgewinnung benutzt werden kann.

Eine weitere Aufgabe der Erfindung ist es, ein Verfahren zur Verfügung zu stellen, das flexibel hinsichtlich der Reaktionsbedingungen ist und bei dem die Temperaturbedingungen dem zu verwertenden Polymer angepasst werden können.

Eine weitere Aufgabe ist es, ein Verfahren zur Verfügung zu stellen, das flexibel ist bezüglich der Reaktionsbedingungen insbesondere hinsichtlich der Reaktionstemperatur, so dass die Reaktion mit einem Polymer mit unterschiedlichen Geschwindigkeiten durchgeführt werden kann und somit beispielsweise kontinuierlichen Entsorgungsvorgängen angepasst werden kann. Dies ist besonders bei kontinuierlicher Arbeitsweise von Bedeutung, wenn z. B. mal viel mal weniger angeliefertes Material alsbald verarbeitet werden soll.

Eine weitere Aufgabe der Erfindung ist es, eine Vorrichtung zur Verfügung zu stellen, mit der das im Folgenden beschriebene Verfahren durchgeführt werden kann.

Diese Aufgabe wird gelöst durch ein Verfahren zur Umsetzung von sauerstoffhaltigen Polymeren unter Bildung von Wasserstoff und Alkalicarbonaten, das dadurch gekennzeichnet ist, dass man Polymere, die Kohlenstoff-, Wasserstoff- und Sauerstoffatome und ggf. weitere Atome enthalten, in innigen Kontakt mit einem Schmelzegemisch von Alkalihydroxid und Alkalicarbonat bringt, die Umsetzung unter Vermeidung von einem direkten Kontakt des Innenraums des verwendeten Reaktors oberhalb des Schmelzegemischs mit dem Sauerstoff der Atmosphäre durchführt, den dabei entstehenden Wasserstoff abtrennt, das dabei entstehende Alkalicarbonat zum Auskristallisieren bringt und abtrennt und im Reaktionsgemisch während der Umsetzung mindestens eine Alkalihydroxidmenge zur Verfügung stellt und eine Alkalihydroxidkonzentration einhält, die zum Starten und Aufrechterhalten der Reaktion mit den Polymeren erforderlich sind.

Das Zurverfügungstellen der erforderlichen Alkalihydroxidmenge kann auf die Weise geschehen, dass man für die Umsetzung eine Menge Schmelzegemisch vorlegt, die mindestens eine Menge Alkalihydroxid enthält, um die Gesamtmenge Polymer umzusetzen. Es ist vorteilhaft, hier einen Überschuss zu verwenden d.h. mehr als zur stöchiometrischen Umsetzung erforderlich ist, z. B. von mindestens 10 Mol-% Alkalihydroxid. Bevorzugt wird aber ein Mehrfaches eingesetzt, z. B. das 2, 3, 4 oder sogar das 10-fache oder mehr der erforderlichen Menge.

Eine weitere Möglichkeit besteht darin, dass man während der Umsetzung Natriumhydroxid nachdosiert.

Vorzugsweise wird die Umsetzung in einer Schmelze bei einer konstanten Temperatur und bei einer konstanten Zusammensetzung durchgeführt, wobei die Temperatur und die Zusammensetzung auf einem Punkt der Liquiduslinie des Stoffsystems liegen.

Es ist vorteilhaft, wenn diese Temperatur in einem Bereich von 1 bis 10 °C entlang der Liquiduslinie variiert.

Vorzugsweise werden die Polymere in zerkleinerter Form verwendet.

Es ist vorteilhaft, in einem System zu arbeiten, das gegenüber der Umgebungsluft abgeschlossen ist.

Vorzugsweise wird ein Schmelzegemisch in Form einer gesättigten Lösung von Alkalicarbonat in Alkalihydroxid verwendet.

Bevorzugt wird als Alkalihydroxid Natriumhydroxid und als Alkalicarbonat Natriumcarbonat verwendet.

In einer weiteren vorteilhaften Ausführungsform wird ein Schmelzegemisch mit eutektischer Zusammensetzung verwendet.

Es kann auch eine Schmelze-Zusammensetzung verwendet werden, die in der Nähe des Eutektikums liegt.

Vorzugsweise liegt die eine oder die andere Komponente in der Schmelze in einer Konzentration vor, die bis zu 0,5 Mol-% höher ist als diejenige, die dem Eutektikum entspricht.

In einer weiteren vorteilhaften Ausführungsform wird ein Schmelzegemisch verwendet, in dem der Anteil von Natriumcarbonat im Schmelzegemisch 6 bis 40, vorzugsweise 6 bis 20, insbesondere 6 bis 10 Mol-% beträgt.

Es ist vorteilhaft, in dem Reaktionsgefäß einen Temperaturgradienten einzustellen.

In einer weiteren vorteilhaften Ausführungsform des erfindungsgemäßen Verfahrens wird die Zugabe der sauerstoffhaltigen Polymeren zeitweise in eine Schmelzezusammensetzung durchgeführt, die oberhalb der Liquiduslinie liegt, und das Nachdosieren von Alkalihydroxid wird erst dann begonnen, wenn die Schmelzezusammensetzung aufgrund des entstandenen Carbonats die Liquiduslinie erreicht.

Es ist auch möglich, während der Umsetzung die Zusammensetzung des Schmelzegemischs durch erhöhte Zugabe von Alkalihydroxid wieder in den Bereich oberhalb der Liquiduslinie zu verschieben und dann die Alkalihydroxidzugabe zu unterbrechen, bis wieder die Liquiduslinie erreicht wird.

Das erfindungsgemäße Verfahren lässt sich vorteilhaft auf die Umsetzung von Polymeren und Polymergemischen aus der Gruppe der Polyester, Polycarbonate, Polyether, Polyacetale, Epoxyharze, Polylactone, Polylactide, Polyglycolyde, Polyacrylate, Polyvinylacetat, Biopolymere, Holz, Zellulose, Lignin, Cutin und Pektin anwenden.

In einer weiteren Ausführungsform des erfindungsgemäßen Verfahrens werden Polymere verwendet, die noch andere Bestandteile enthalten wie Verstärkungsfasern, Füllstoffe, übliche Additive oder die als Verbundstoffe vorliegen.

In einer weiteren Ausführungsform des erfindungsgemäßen Verfahrens werden insbesondere bei Verwendung von Polymeren, bei denen das Verhältnis von Sauerstoffatomen zu Kohlenstoffatomen kleiner als 1 ist, der zur vollständigen Oxidation der Kohlenstoffatome benötigte Sauerstoff in freier oder gebundener Form in die Schmelze unterhalb der Oberfläche der Schmelze eingeführt. In gebundener Form kann der Sauerstoff auch separat oder zusammen mit den Eingangsstoffen oberhalb der Schmelze zugegeben werden.

Der Sauerstoff kann in gebundener Form vorteilhaft z. B. als Ameisensäure, Oxalsäure, Kohlenstoffdioxid, Wasser eingeführt werden.

Das Verfahren wird vorzugsweise kontinuierlich durchgeführt.

Ein weiterer Gegenstand der Erfindung ist eine Apparatur zur Durchführung des vorstehend beschriebenen Verfahrens, die gekennzeichnet ist durch einen Reaktor (1) zur Aufnahme der Reaktanten und zur Durchführung der Umsetzung; einer Vorrichtung (2) zum Vermengen des Schmelzegemischs und der Polymeren, des nachdosierten Alkalihydroxids, sowie ggf. weiterer Zusatzstoffe, einem Vorratsgefäß (5) zur Aufnahme von Alkalihydroxid sowie einer Zuleitung (4) zum Reaktor, einem Vorratsgefäß (7) zur Aufnahme der Polymere und einer Zuleitung (6) zum Reaktor, einer Ableitung (8) zur Ableitung des entstehenden Wasserstoffs, einer Vorrichtung (9) zur Förderung des auskristallisierten Alkalicarbonats über eine Ableitung (10) zu einem Vorratsgefäß (11) zur Aufnahme des entstandenen Alkalicarbonats, sowie eine Vorrichtung (12) zum Einleiten von Inertgas in die Vorratsgefäße (5) und (7), die Zuleitung (4) und (6) sowie den Reaktorraum (3) oberhalb des Schmelzegemisches.

Zwischen den Vorratsgefäßen 5 und 7 und den Leitungen 4 und 6 können entsprechende Fördervorrichtungen wie Schnecken, Zellräder oder Schieber eingebaut sein. Die Apparatur weist eine Zuleitung 13 auf um ggf. Sauerstoff in gebundener oder freier Form unterhalb der Oberfläche des Schmelzegemischs einzuleiten.

Zum Einleiten von Inertgas in Zuleitungen und Reaktionsraum können weitere Zuleitungen (14a - e) vorgesehen sein.

Die Durchführung des erfindungsgemäßen Verfahrens kann in einem Reaktionsgefäß (Reaktor) durchgeführt werden, das unter den Reaktionsbedingungen beständig ist gegenüber dem Reaktionsgemisch; hier eignen sich als Material insbesondere Edelstähle wie Inconel.

Der Reaktor kann beheizt oder auch gekühlt werden, wozu beispielsweise eine Ummantelung geeignet ist, durch die ein entsprechendes Heiz- oder Kühlmittel geleitet wird. Es ist aber auch möglich, die Temperatur auf andere Weise zu regeln, z. B. durch elektrische Heizung oder durch ein Wärmerückgewinnungssystem, mit welchem die exotherme Reaktionswärme als Nutzenergie abgeführt wird.

Besonders vorteilhaft ist es, dass das Heiz- bzw. Kühlsystem so ausgestaltet ist, dass in dem Reaktor entweder stufenlos oder auch abschnittsweise ein Temperaturgradient im Reaktionsgemisch erzeugt wird.

Die für die Umsetzung erforderlichen Ausgangsstoffe nämlich die Polymere, das Alkalihydroxid und so weit erforderlich auch das Alkalicarbonat, ggf. Zuschlagstoffe oder auch rückgeführte Schmelzeanteile können dem Reaktor getrennt, aber auch gemeinsam in einem entsprechenden Mischungsverhältnis zudosiert werden. Dies kann aus entsprechenden Vorratsgefäßen geschehen, wobei dafür Sorge zu tragen ist, dass zu Beginn der Umsetzung in dem Reaktionsraum kein Sauerstoff in den Raum oberhalb der Oberfläche des Reaktionsgemisches erfolgt. Dies kann z. B. auf die Weise geschehen, dass vor Beginn der Reaktion der Reaktorraum durch Einleiten von Inertgas sauerstofffrei gespült wird und auch die Vorratsgefäße und die Zuleitungen mit Inertgas gespült werden. Die Vorratsgefäße werden dann zweckmäßigerweise gegenüber der Atmosphäre abgeschlossen oder es wird weiter mit Inertgas eventuell einströmende Luft verdrängt.

Bei der Umsetzung ist darauf zu achten, dass das Polymer in innigem Kontakt mit dem Schmelzegemisch kommt. Es ist vorteilhaft, wenn das Polymer eine möglichst große Kontaktfläche bietet, was durch entsprechendes Zerkleinern des Artikels aus Polymer geschehen kann.

Zweckmäßig wird während der Umsetzung in ausreichender Weise gerührt. Es ist aber auch möglich, den innigen Kontakt z. B. durch Umwälzen der Schmelze zu gewährleisten. Zum guten Vermischen können auch statische Mischer eingesetzt werden.

Die Polymere können in den verschiedensten Formen eingegeben werden, z. B. als Granulat, Pellets, als zerkleinertes Material, wie z. B. Häcksel, auch ein pulverförmiges Eingeben ist möglich.

Es ist auch möglich, das Polymer in Behältern in die Schmelze einzuführen, wobei die Behälter Öffnungen aufweisen, damit die Schmelze in das Innere der Behälter gelangen kann, z. B. in geschlossene Drahtkörbe. Dadurch ist es möglich, Bestandteile wie z. B. Metalle oder sonstiges Material, das nicht an der Umsetzung teilnimmt in dem Behälter zu halten, so dass es nicht mit der Schmelze in das sich absetzende Alkalicarbonat gelangt. Vorteilhaft ist dies auch bei Polymeren mit höherer Dichte als die Schmelze, damit diese nicht zu schnell absinken, sondern bis zur vollen Umsetzung in der oberen Reaktionszone gehalten werden.

Das Freihalten der Vorratsgefäße und des Raumes im Reaktor oberhalb der Schmelzefläche von Sauerstoff ist deshalb angezeigt, um die Bildung von Knallgas zu vermeiden und um eine möglichst reinen Wasserstoff als Produkt zu gewinnen.

Falls, um die vollständige Umwandlung des Kohlenstoffs in den Polymeren zu Kohlenstoffdioxid und somit zu Natriumcarbonat zu gewährleisten, das Polymer selbst nicht genügend Sauerstoffatom aufweist, kann es erforderlich sein insbesondere bei Polymeren, bei denen das Verhältnis Sauerstoff zu Kohlenstoff kleiner als 1 ist, Sauerstoff in das System einzuführen. Dies kann in Form von freiem Sauerstoff oder auch in Form von Sauerstoff in gebundener Form, d. h. durch Zudosieren von Verbindungen, die den entsprechenden Sauerstoff für die Oxidation liefern geschehen.

Das Zudosieren von freiem Sauerstoff erfolgt unterhalb der Oberfläche der Schmelze und das Zudosieren des gebundenen Sauerstoffs erfolgt unterhalb oder oberhalb der Oberfläche der Schmelze.

Der Reaktor ist ferner versehen mit entsprechenden Zuleitungen (4), (6), durch die das Polymer und die einzelnen weiteren Komponenten des Reaktionssystems zudosiert werden können. Weitere Zuleitungen (14a - e) zum Einleiten von Inertgas sind zweckmäßig.

Der Reaktor ist ferner mit Messfühlern für alle Betriebsparameter, insbesondere der Temperatur versehen und enthält Zuleitungen für das Zuleiten von Komponenten unterhalb der Oberfläche der Schmelze.

Ferner ist ein Ablass für das Ableiten des entstehenden Wasserstoffs vorhanden sowie Ableitungen für das Ableiten des während der Reaktion entstehenden und sich abscheidenden Natriumcarbonats.

Bei einer Arbeitsweise, bei der die Dichte der Schmelze kleiner ist als das entstehende Natriumcarbonat, wird das Natriumcarbonat am unteren Teil des Reaktors schrittweise oder kontinuierlich abgelassen. Bei Systemen, bei denen die Dichte in der Schmelze höher ist als die des entstehenden Natriumcarbonats, reichert sich das Natriumcarbonat an der Oberfläche der Schmelze an und wird durch entsprechende Auslässe aus dem System entfernt.

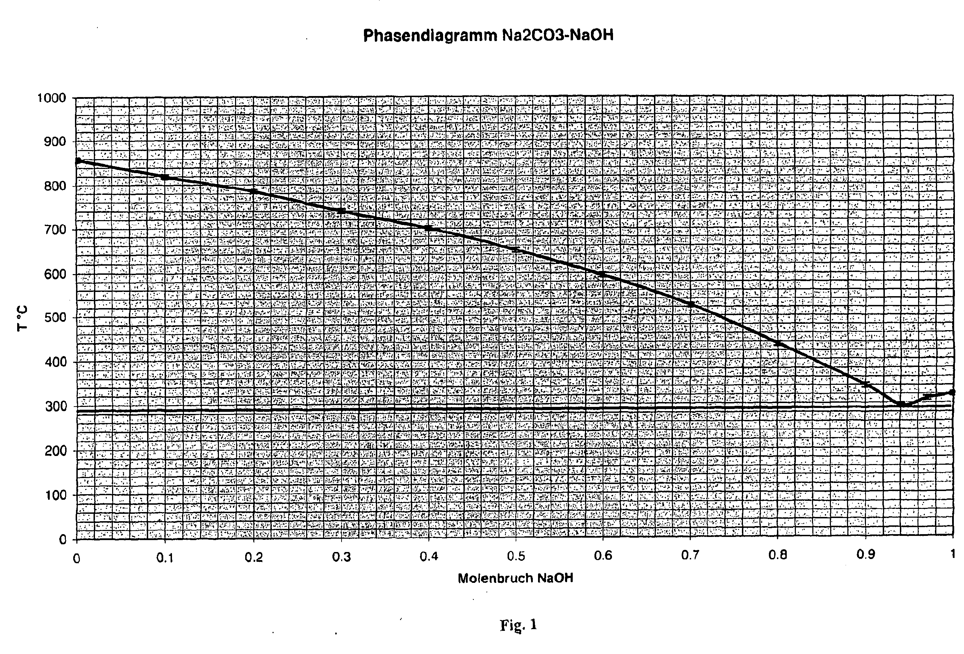

In Figur 1 wird ein Phasendiagramm von Natriumcarbonat und Natriumhydroxid als Beispiel für ein System Alkalicarbonat Alkalihydroxid dargestellt. Bei einem Arbeiten direkt auf der Liquiduslinie liegt eine gesättigte Lösung vor. Durch das Entstehen von Natriumcarbonat an der Liquiduslinie verarmt das System an Natriumhydroxid, d.h. die Menge der gesättigten Lösung nimmt bei konstanter Zusammensetzung ab und kann durch Nachdosieren wieder in den ursprünglichen Zustand gebracht werden.

Man kann durch Erhöhen des Natriumhydroxidgehalts des Stoffsystems bei konstanter Temperatur auf einen Punkt oberhalb der Liquiduslinie in den Bereich der ungesättigten Lösungen kommen. Im Laufe der Umsetzung erreicht man dabei jedoch von rechts nach links wegen der Zunahme von Na₂ CO₃ in der Schmelze wieder die Liquiduslinie, ab wo Na₂ CO₃ auskristallisieren kann und wo es dann erforderlich ist, wieder Natriumhydroxid nachzudosieren.

Für Systeme aus anderen Alkalicarbonaten und Alkalihydroxiden gelten ähnliche Verhältnisse wie bei dem System Natriumhydroxid Natriumcarbonat gezeigt.

Es versteht sich von selbst, dass man beispielsweise durch Verwendung von Gemischen von Alkalihydroxiden, Alkalicarbonaten oder auch Hilfsstoffen wie Salzen oder Oxiden in analoger Weise ähnliche Verhältnisse mit den entsprechenden Liquiduslinien bzw. Liquidusflächen bei termären oder höheren Mehrstoffsystemen schaffen kann.

Bei der Verarbeitung beispielsweise von Glaserfaser verstärkten Verbundstoffen findet im Laufe der Reaktion ebenfalls eine Veränderung, d. h. Verschiebungen bei dem Phasendiagramm statt. Die entsprechenden Bedingungen, d. h. das Vorliegen einer entsprechenden Liquiduslinie und geeigneter Punkte, bei denen eine Alkalicarbonatabscheidung stattfindet, können durch einige Vorversuche, die im handwerklichen Können des Durchschnittsfachmanns liegen, ermittelt werden.

Es ist möglich, dass beispielsweise bei der Verarbeitung von faser-verstärkten Polymeren durch das Einführen von Aluminiumoxid, Siliziumoxid und Boroxid auch die Dichteverhältnisse verändert werden, so dass die Schmelze eine größere Dichte aufweist als das entstehende Alkalicarbonat. In einem solchen Fall scheidet sich selbstverständlich das Alkalicarbonat auf der Oberfläche der Schmelze ab.

Wie dem Phasendiagramm Natriumhydroxid/Natriumcarbonat zu entnehmen ist, ist es bei dem erfindungsgemäßen Verfahren möglich, beispielsweise entsprechend der Liquiduslinie bei verschiedenen Temperaturen und verschiedenen Schmelzezusammensetzungen zu arbeiten. Auf diese Weise hat man ein Mittel durch Erhöhen des Natriumcarbonatgehaltes in der Schmelze in höhere Temperaturbereiche zu gelangen und dadurch die Reaktionsgeschwindigkeit bei einem bestimmten Polymer während der Umsetzung zu erhöhen.

Man hat auch auf diese Weise ein Mittel um für einen speziellen Kunststoff, der bei niedrigeren Temperatur schwer zu verwerten ist, bei höheren Temperaturen zu arbeiten.

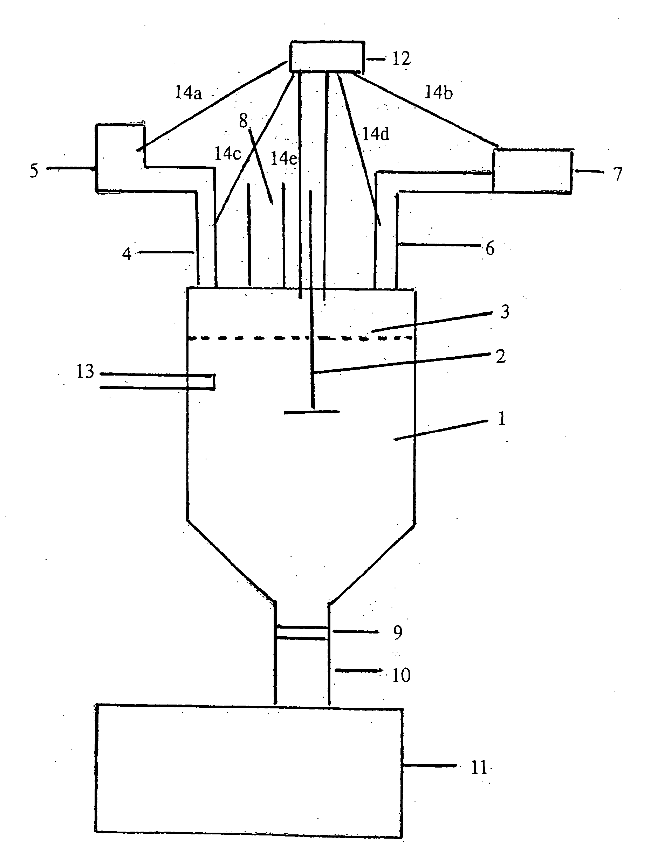

Zur Durchführung des erfindungsgemäßen Verfahrens kann eine Apparatur dienen, wie sie in Figur 2 dargestellt ist.

Die Erfindung wird anhand folgender Beispiele näher erläutert:

### Beispiel 1

In einen beheizbaren Rührreaktor aus Edelstahl werden festes Natriumcarbonat (Na₂CO₃) und festes Natriumhydroxid (NaOH) im Mol-Verhältnis von 1 : 8 gegeben und unter Mischen solange aufgeheizt, bis eine homogene Schmelze entstanden ist.

Die Schmelze wird dann auf eine Temperatur von 352 °C eingestellt, die der experimentell gefundenen Liquidustemperatur für dieses Mischverhältnis entspricht, und möglichst nahe bei dieser Temperatur, d. h. allenfalls nur geringfügig oberhalb dieser Temperatur gehalten.

Aus einer Vorratskammer werden in den oberen Teil des Reaktors feste Polyethylenterephthalat Häckselteilchen aus Abfallflaschen portionsweise und unter schnellem Rühren zur Schmelze gegeben. Dadurch wird ein gutes Kontaktieren der Teilchen mit der Schmelze gewährleistet.

Die Luft in den verwendeten Vorratsbehältern wird vorher durch Inertgas vertrieben, um auf diese Weise für den weitestmöglichen Ausschluss von

Sauerstoff zu sorgen. Auch der Raum im Reaktor oberhalb der Schmelze wird mit einer Inertgasatmosphäre weitgehend sauerstofffrei gehalten.

Die Zugabe von Inertgas wird dann nach Einsetzen der eigentlichen Reaktion und des Freiwerdens von Wasserstoff abgestellt.

Der während der Reaktion frei werdende Wasserstoff wird durch ein separates Rohr abgeleitet. Durch die Bildung von Natriumcarbonat wird solange Natriumhydroxid verbraucht, bis die Umsetzung zum Erliegen kommt. Weil die Schmelze mit Na₂ CO₃ gesättigt ist, fällt das während der Reaktion gebildete Natriumcarbonat am unteren Teil des Reaktors, wo nicht gerührt wird, als kristalliner Niederschlag aus. Die Schmelzezusammensetzung bleibt konstant, während die Schmelzemenge abnimmt. Nach Beendigung der Umsetzung werden das auskristallisierte Natriumcarbonat und die darüber stehende restliche Natriumhydroxid/Natriumcarbonatschmelze von einander getrennt.

### Beispiel 2

In einem Rührreaktor, wie er in Beispiel 1 verwendet wurde, werden festes Natriumcarbonat und festes Natriumhydroxid im Mol-Verhältnis 1 : 4 vermischt und solange aufgeheizt bis eine homogene Schmelze vorliegt.

Das Gemisch wird auf eine Temperatur von 432 °C eingestellt, diese Temperatur entspricht dem experimentell gefundenen Liquiduspunkt dieser Zusammensetzung. Während der Umsetzung wird die Schmelze möglichst knapp oberhalb dieser Temperatur gehalten.

Aus einer Vorratskammer, die unter Inertgas steht, wird ein Gemenge von festen Polyethylenterephthalat Häckseln aus Abfallflaschen und festem körnigem NaOH im Gewichtsverhältnis 1 : 4 portionsweise und unter schnellem Rühren zur Schmelze gegeben.

Während des Beginns der Reaktion wird über der Schmelze eine Inertgasatmosphäre aufrecht erhalten, die Zuleitung von Inertgas wird jedoch, sobald die Reaktion im Gange ist, abgestellt. Infolge der ständigen Nachdosierung von festem körnigen NaOH zusammen mit den festen PET Häckseln bleiben die Schmelzezusammensetzung und das Schmelzevolumen konstant, während das Volumen des Na₂ CO₃ zunimmt.

Das während der Reaktion gebildete Natriumcarbonat wird in zeitlichen Abständen abgelassen, wobei die Austragsmenge an Natriumcarbonat und die Zugabemenge von PET Häckseln und NaOH so aufeinander abgestimmt werden, dass der Füllstand im Reaktor nahezu konstant bleibt.

Ein Vergleich der Reaktionsgeschwindigkeiten von Beispiel 1 und 2 zeigt, dass diese bei Beispiel 2 ungefähr das Siebenfache von der von Beispiel 1 ist.

### Beispiel 3

In einem Reaktor wie bei den Beispielen 1 und 2 verwendet erfolgt die Zufuhr der Eingangsstoffe Polyethylenterephthalat Häcksel und Natriumhydroxid aus separaten Vorratskammern. Dabei werden beide Stoffströme jeweils für sich vorgeheizt. Das NaOH wird bis über seinen Schmelzpunkt vorgeheizt, so dass es in flüssiger Form zudosiert werden kann.

In einer Variante werden die Eingangsstoffe in den Reaktor oberhalb der Oberfläche des Reaktionsgemisches eingeleitet, so dass sie frei fallend in das Reaktionsgemisch gelangen.

In einer weiteren Variante werden die beiden Ströme unterhalb der Oberfläche des Schmelzegemischs direkt in die Schmelze eingeleitet. Das Auskristallisieren und das Sichabsetzen des gebildeten Natriumcarbonats wird durch Anlegen eines Temperaturgradienten im Reaktor beschleunigt. Dabei wird der untere Teil der Schmelze auf eine Temperatur von 320 °C gehalten, der obere Teil auf einer Temperatur von 500 °C.

Das Austragen des gebildeten Natriumcarbonats erfolgt mit Hilfe einer Schnecke.

### Beispiel 4

Pulverförmiges Natriumcarbonat und kleinkörniges Natriumhydroxid werden in einem Molverhältnis 6 : 94 entsprechend der eutektischen Zusammensetzung und damit mit dem niedrigsten Schmelzpunkt des Stoffssystems miteinander vermengt. Dem Gemenge wird ein klein gemahlener Abfallstoff zugesetzt, der aus Kompositmaterialien des Baugewerbes stammt und zu 95 Gew.-% aus Glasfaser verstärkten Polymeren mit einem Polymeranteil von ca. 75 Gew.-% besteht.

Die Restanteile sind überwiegend Holz und Farbe.

Die Materialien werden gut durchmischt und in einem beheizbaren Reaktor mit einer Aufheizrate von ca. 100 °C pro Stunde langsam auf 580 °C Endtemperatur aufgeheizt. Sobald sich im Reaktor eine Schmelze bildet (gemessene Temperatur 285 °C), setzt die Reaktion mit Gasentwicklung ein.

Das gebildete Gas wird durch ein Ablassrohr abgeleitet, es besteht aus Wasserstoff.

Während der Anlaufphase wird der Reaktor unter Inertgasatmosphäre gesetzt.

Mit fortschreitender Reaktion bildet sich wegen der gelösten Glasfaserbestandteile wie beispielsweise Al₂O₃, SiO₂, MgO und B₂O₃ ein komplexes Mehrkomponentensystem mit wechselnder Zusammensetzung. Schmelzpunkte, Liquiduslinien und andere physikalischen Eigenschaften sind dadurch gegenüber dem Schmelzpunkt und den anderen physikalischen Eigenschaften des binären Systems Na₂CO₃-NaOH verschoben.

Bei dieser Umsetzung setzt sich gebildetes Natriumcarbonat auf der Oberfläche der Schmelze ab, da die Schmelze aufgrund der spezifisch schwereren anorganischen Bestandteile des Kompositmaterials eine höhere Dichte erreicht als die von Natriumcarbonat. Das sich oberhalb der Schmelze ansammelnde Natriumcarbonat wird in zeitlichen Abständen ausgetragen.

Im übrigen sind Gegenstand der Erfindung die Lehren, welche in den Patentansprüchen 1 bis 24 offenbart werden.

## Patentansprüche

1. Verfahren zur Umsetzung von sauerstoffhaltigen Polymeren unter Bildung von Wasserstoff und Alkalicarbonaten, **dadurch gekennzeichnet,**
**dass** man Polymere, die Kohlenstoff-, Wasserstoff und Sauerstoffatome und ggf. weitere Atome enthalten,
in innigen Kontakt mit einem Schmelzegemisch von Alkalihydroxid und Alkalicarbonat bringt, die Umsetzung unter Vermeidung von einem direkten Kontakt des Innenraumes des verwendeten Reaktors oberhalb des Schmelzgemischs mit dem Sauerstoff der Atmosphäre durchführt,
den dabei entstehenden Wasserstoff abtrennt und
das dabei entstehende Alkalicarbonat zum Auskristallisieren bringt, abtrennt und im Reaktionsgemisch während der Umsetzung mindestens eine Alkalihydroxidmenge zur Verfügung stellt und
eine Alkalihydroxidkonzentration einhält,
die zum Starten und Aufrechterhalten der exothermen Reaktion von Alkalihydroxid mit den sauerstoffhaltigen Polymeren erforderlich sind.

2. Verfahren nach Anspruch 1, **dadurch gekennzeichnet, dass** man einen Überschuss an Schmelze vorlegt, so dass ein Überschuss von Alkalihydroxid bezogen auf das Polymer vorhanden ist.

3. Verfahren nach Anspruch 1, **dadurch gekennzeichnet, dass** man Alkalihydroxid nachdosiert.

4. Verfahren nach Anspruch 1, **dadurch gekennzeichnet, dass** die Umsetzung in einer Schmelze bei einer konstanten Temperatur und bei einer konstanten Zusammensetzung durchgeführt wird, wobei die Temperatur und die Zusammensetzung auf einem Punkt der Liquiduslinie des Stoffsystems liegen.

5. Verfahren nach Anspruch 4, **dadurch gekennzeichnet, dass** diese Umsetzungstemperatur in einem Bereich von 1 bis 10 °C entlang der Liquiduslinie variiert.

6. Verfahren nach mindestens einem der Ansprüche 1 - 5, **dadurch gekennzeichnet, dass** man die Polymere in zerkleinerter Form verwendet.

7. Verfahren nach mindestens einem der Ansprüche 1 - 6, **dadurch gekennzeichnet, dass** man in einem System arbeitet, das gegenüber der Umgebungsluft abgeschlossen ist.

8. Verfahren nach mindestens einem der Ansprüche 1 - 7, **dadurch gekennzeichnet, dass** man ein Schmelzegemisch in Form einer gesättigten Lösung von Alkalicarbonat in Alkalihydroxid verwendet.

9. Verfahren nach mindestens einem der Ansprüche 1 - 8, **dadurch gekennzeichnet, dass** man als Alkalihydroxid Natriumhydroxid und als Alkalicarbonat Natriumcarbonat verwendet.

10. Verfahren nach mindestens einem der Ansprüche 1 - 9, **dadurch gekennzeichnet, dass** man ein Schmelzegemisch mit eutektischer Zusammensetzung verwendet.

11. Verfahren nach mindestens einem der Ansprüche 1 - 9, **dadurch gekennzeichnet, dass** man eine Schmelze-Zusammensetzung verwendet, die in der Nähe des Eutektikums liegt.

12. Verfahren nach Anspruch 11, **dadurch gekennzeichnet, dass** in der Schmelze die eine oder andere Komponente mit einer Konzentration vorliegt, die bis zu 0,5 Mol-% höher ist als diejenige, die dem Euteklikum entspricht.

13. Verfahren nach Anspruch 9, **dadurch gekennzeichnet, dass** man ein Schmelzegemisch verwendet, in dem der Anteil von Natriumcarbonat im Schmelzegemisch 6 bis 40, vorzugsweise 6 bis 20, insbesondere 6 bis 10 Mol-% beträgt.

14. Verfahren nach mindestens einem der Ansprüche 1 - 13, **dadurch gekennzeichnet, dass** man im Reaktionsgefäss einen Temperaturgradienten einstellt.

15. Verfahren nach Anspruch 1, **dadurch gekennzeichnet, dass** man die Zugabe der Polymeren zeitweise in eine Schmelzezusammensetzung durchführt, die oberhalb der Liquiduslinie liegt und das Nachdosieren von Alkalihydroxid erst wieder beginnt, wenn die Schmelze aufgrund des entstandenen Carbonats die Liquiduslinie erreicht.

16. Verfahren nach Anspruch 1, **dadurch gekennzeichnet, dass** man während der Umsetzung die Zusammensetzung des Schmelzegemischs durch erhöhte Zugabe von Alkalihydroxid in den Bereich oberhalb der Liquidus Linie verschiebt und/oder zeitweise in diesem Bereich hält und die Alkalihydroxidzugabe unterbricht, bis wieder die Solidus/Liquidus Linie erreicht wird.

17. Verfahren nach mindestens einem der Ansprüche 1 - 16, **dadurch gekennzeichnet, dass** man für die Umsetzung Polymere oder Polymergemische aus der Gruppe der Polyester, Polycarbonate, Polyether, Polyacetale, Epoxyharze, Polylactone, Polylactide, Polyglycolide, Polyacrylate. Polyvinylacetat, Biopolymere, Holz, Zellulose, Lignin, Cutin und Pektin verwendet.

18. Verfahren nach mindestens einem der Ansprüche 1 - 17, **dadurch gekennzeichnet , dass** man Polymere verwendet, die noch andere Bestandteile wie Verstärkungsfasern, Füllstoffe, übliche Additive enthalten oder als Verbundstoffe vorliegen.

19. Verfahren nach mindestens einem der Ansprüche 1 - 18, **dadurch gekennzeichnet, dass** Sauerstoff in freier oder gebundener Form zur Schmelze gegeben wird, insbesondere bei Polymeren, bei denen das Verhältnis von Sauerstoffatomen zu Kohlenstoffatomen kleiner als 1 ist und die zur vollständigen Oxidation der Kohlenstoffatome Sauerstoff benötigen, wobei der Sauerstoff in freier Form unterhalb der Oberfläche der Schmelze eingeleitet wird und der Sauerstoff in gebundener Form oberhalb oder unterhalb der Oberfläche der Schmelze eingeleitet wird.

20. Verfahren nach Anspruch 19, **dadurch gekennzeichnet, dass** man den gebundenen Sauerstoff in Form von Ameisensäure, Oxalsäure, Wasser oder Kohlenstoffdioxid einführt.

21. Verfahren nach mindestens einem der Ansprüche 1 - 20, **dadurch gekennzeichnet, dass** man das Verfahren kontinuierlich durchführt.

22. Vorrichtung zur Durchführung eines Verfahrens gemäss einem der Ansprüche 1 - 21, **dadurch gekennzeichnet, dass** die Vorrichtung einen Reaktor (1) zur Aufnahme der Umsetzkomponenten und zur Durchführung der Reaktion umfasst sowie eine Vorrichtung (2) zum Mischen oder Vermengen des Reaktionsgutes, einem Vorratsgefäss (5) zur Aufnahme von Alkalihydroxid sowie einer Zuleitung (4) zwecks Zuleitung des Alkalihydroxid in den Reaktor, ein Vorratsgefäss (7) zur Aufnahme der Polymeren und einer Zuleitung (6) zur Zuleitung des Polymeren in den Reaktor, einer Ableitung (8) zur Ableitung des entstehenden Wasserstoffs, einer Vorrichtung (9) zum Transport des entstandenen Alkalicarbonats durch eine Ableitung (10) in eine Vorratsgefäss (11), einer Vorrichtung (12) sowie Zuleitungen (14a - e) für die Zuleitung von Inertgas zwecks Vertreibung von Sauerstoff aus dem Raum (3) im Reaktor oberhalb der Schmelzeoberfläche und den Vorratsgefässen 5 und 7 sowie der zugehörigen Leitungen 4 und 6.

23. Vorrichtung nach Anspruch 22, **dadurch gekennzeichnet, dass** der Reaktor mit einem kombinierten Heizung Kühlsystem versehen ist, das mit Hilfe von Wärmeträgermedien oder elektrischen Vorrichtungen betrieben wird und zur Wärmerückgewinnung geeignet ist.

24. Vorrichtung nach Anspruch 22 oder 23, **dadurch gekennzeichnet, dass** der Reaktor eine Zuleitung 13 aufweist zwecks Einleitung von freiem oder gebundenem Sauerstoff unterhalb der Schmelzeoberfläche (3).

## Claims

1. A method for converting oxygenic polymers while forming hydrogen and alkali carbonates, **characterized in that**
polymers containing the carbon, hydrogen, and oxygen atoms, and optionally additional atoms,
are brought into close contact with a melt mixture from alkali hydroxide and alkali carbonate, the conversion being carried out while avoiding any direct contact with the interior of the reactor utilized above the melt mixture together with the oxygen of the atmosphere,
the hydrogen thereby created is precipitated, and
the alkali carbonate thereby created is brought to crystallize, is precipitated,
and at least one amount of alkali hydroxide is provided in the reaction mixture during conversion, and
an alkali hydroxide concentration is maintained,
which is required for starting and maintaining the exothermal reaction of alkali hydroxide together with the oxygenic polymers.

2. The method according to claim 1, **characterized in that** an excess of melt is present such that an excess of alkali hydroxide based on the polymer is present.

3. The method according to claim 1, **characterized in that** alkali hydroxide is dosed in retrospect.

4. The method according to claim 1, **characterized in that** the conversion is carried out in a melt at a constant temperature, and at a constant composition, wherein the temperature and the composition are at a point of the liquidus line of the material system.

5. The method according to claim 4, **characterized in that** said conversion temperature varies within a range of 1 to 10°C along the liquidus line.

6. The method according to at least one of the claims 1-5, **characterized in that** the polymers are used in a crushed form.

7. The method according to at least one of the claims 1-6, **characterized in that** the work is carried out in a system that is closed from ambient air.

8. The method according to at least one of the claims 1-7, **characterized in that** a melt mixture in the form of a saturated solution from alkali carbonate in alkali hydroxide is utilized.

9. The method according to at least one of the claims 1-8, **characterized in that** sodium hydroxide is utilized as the alkali hydroxide, and sodium carbonate is used as the alkali carbonate.

10. The method according to at least one of the claims 1-9, **characterized in that** a melt mixture having a eutectic composition is utilized.

11. The method according to at least one of the claims 1-9, **characterized in that** a melt mixture composition is utilized that is adjacent to the eutectic.

12. The method according to claim 11, **characterized in that** one or another component in the melt is present at a concentration that is up to 0.5 Mol by percent higher than that corresponding to the eutectic.

13. The method according to claim 9, **characterized in that** a melt mixture is utilized, in which the portion of sodium carbonate is 6 to 40, preferably 6 to 20, particularly 6 to 10 Mol by percent in the melt mixture.

14. The method according to at least one of the claims 1-13, **characterized in that** a temperature gradient is set in the reaction vessel.

15. The method according to claim 1, **characterized in that** the admixture of the polymers is carried out intermittently into a melt composition that is above the liquidus line, and that the dosing in retrospect of alkali hydroxide is only resumed once the melt has reached the liquidus line due to the carbonate created.

16. The method according to claim 1, **characterized in that** the composition of the melt mixture is offset into the range above the liquidus line, and/or is intermittently maintained in this range by means of an increased admixture of alkali hydroxide, and that the alkali hydroxide admixture is interrupted until the solidus/liquidus line has again been reached.

17. The method according to at least one of the claims 1-16, **characterized in that** polymers or polymer mixtures from the group of the polyesters, polycarbonates, polyethers, polyacetates, epoxy resins, polylactones, polylactides, polyglycolides, polyacrylates, polyvinyl acetates, biopolymers, wood, cellulose, lignin, cutin, and pectin are utilized for the conversion.

18. The method according to at least one of the claims 1-17, **characterized in that** polymers are utilized, which contain additional components, such as reinforcement fibers, fillers, common additives, or which are present as composites.

19. The method according to at least one of the claims 1-18, **characterized in that** oxygen in free and bound form is added to the melt, particularly with polymers, the ratio of oxygen atoms to carbon atoms is lower than 1, and which require oxygen for the complete oxidation of the carbon atoms, wherein oxygen in the free form is introduced below the surface of the melt, and oxygen in the bound form is introduced above or below the surface of the melt.

20. The method according to claim 19, **characterized in that** bound oxygen is introduced in the form of formic acid, oxalic acid, water, or carbon dioxide.

21. The method according to at least one of the claims 1-20, **characterized in that** the method is carried out continuously.

22. A device for carrying out a method according to one of the claims 1-21, **characterized in that** the device comprises a reactor (1) for receiving the conversion components and for carrying out the reaction, and a device (2) for admixing or blending the reaction product, a storage vessel (5) for receiving alkali hydroxide, and a feed line (4) for feeding the alkali hydroxide into the reactor, a storage vessel (7) for receiving the polymers, and a feed line (6) for feeding the polymers into the reactor, a discharge line (8) for discharging the hydrogen created, a device (9) for transporting the alkali carbonate created through a discharge line (10) into a storage vessel (11), a device (12), and feed lines (14a-e) for feeding inert gas for the purpose of dissipating oxygen from the chamber (3) in the reactor above the melt surface and from the storage vessels 5 and 7, as well as the associated lines 4 and 6.

23. The device according to claim 22, **characterized in that** the reactor is equipped with a heating/cooling system combination that is operated by means of heat transfer media, or electrical devices, and is suitable for heat recovery,

24. The device according to claims 22 or 23, **characterized in that** the reactor has a feed line 13 for introducing free or bound oxygen below the melt surface (3).

## Revendications

1. Procédé de transformation de polymères oxygénés moyennant la formation d'hydrogène et de carbonates alcalins, **caractérisé en ce**
**que** l'on amène des polymères qui contiennent des atomes de carbone, d'hydrogène et d'oxygène, et le cas échéant d'autres atomes, en contact intime avec un mélange fondu d'hydroxyde alcalin et de carbonate alcalin,
**que** l'on exécute la réaction en évitant un contact direct de l'espace intérieur du réacteur utilisé, au-dessus du mélange fondu, avec l'oxygène de l'atmosphère,
**que** l'on sépare l'hydrogène obtenu lors de l'opération,
**que** l'on cristallise et que l'on sépare le carbonate alcalin obtenu lors de l'opération,
et **que**, pendant la réaction, on met à disposition dans le mélange réactionnel une quantité d'hydroxyde alcalin et
**que** l'on maintient une concentration d'hydroxyde alcalin
qui sont nécessaires pour le démarrage et l'entretien de la réaction exothermique de l'hydroxyde alcalin avec le polymère oxygéné.

2. Procédé selon la revendication 1, **caractérisé en ce que** l'on met en présence un excès de matière fondue, de telle sorte qu'il y ait un excès d'hydroxyde alcalin, rapporté au polymère.

3. Procédé selon la revendication 1, **caractérisé en ce que** l'on ajoute ultérieurement de l'hydroxyde alcalin par dosage.

4. Procédé selon la revendication 1, **caractérisé en ce que** la réaction est effectuée dans une matière fondue à une température constante et pour une composition constante, la température et la composition se trouvant sur un point de la ligne de liquidus du système de composants.

5. Procédé selon la revendication 4, **caractérisé en ce que** cette température de réaction varie dans un intervalle de 1 à 10 °C le long de la ligne de liquidus.

6. Procédé selon l'une au moins des revendications 1 à 5, **caractérisé en ce que** l'on utilise les polymères sous forme fragmentée.

7. Procédé selon l'une au moins des revendications 1 à 6, **caractérisé en ce que** l'on travaille dans un système qui est fermé vis-à-vis de l'air environnant.

8. Procédé selon l'une au moins des revendications 1 à 7, **caractérisé en ce que** l'on utilise un mélange fondu sous la forme d'une solution saturée de carbonate alcalin dans l'hydroxyde alcalin.

9. Procédé selon l'une au moins des revendications 1 à 8, **caractérisé en ce que** l'on utilise comme hydroxyde alcalin de l'hydroxyde de sodium et comme carbonate alcalin du carbonate de sodium.

10. Procédé selon l'une au moins des revendications 1 à 9, **caractérisé en ce que** l'on utilise un mélange fondu de composition eutectique.

11. Procédé selon l'une au moins des revendications 1 à 9, **caractérisé en ce que** l'on utilise une composition de la matière fondue qui se trouve proche de l'eutectique.

12. Procédé selon la revendication 11, **caractérisé en ce que** dans la matière fondue, l'un ou l'autre composant est présent en une concentration qui est supérieure de jusqu'à 0,5 % en mole à celle qui correspond à l'eutectique.

13. Procédé selon la revendication 9, **caractérisé en ce que** l'on utilise un mélange fondu dans lequel la proportion de carbonate de sodium dans le mélange fondu est de 6 à 40, de préférence de 6 à 20, en particulier de 6 à 10 % en mole,

14. Procédé selon l'une au moins des revendications 1 à 13, **caractérisé en ce que** l'on règle dans la cuve de réaction un gradient de température.

15. Procédé selon la revendication 1, **caractérisé en ce que** l'on exécute temporairement l'addition des polymères dans une composition de matière fondue qui se trouve au-dessus de la ligne de liquidus et que l'on ne recommence d'addition ultérieure dosée d'hydroxyde alcalin que quand la matière fondue atteint la ligne de liquidus du fait du carbonate produit.

16. Procédé selon la revendication 1, **caractérisé en ce que**, pendant la réaction, on décale la composition du mélange fondu dans la zone au-dessus de la ligne de liquidus par addition accrue d'hydroxyde alcalin et/ou qu'on la maintient temporairement dans cette zone et qu'on interrompt l'addition d'hydroxyde alcalin jusqu'à ce que la ligne de liquidus soit atteinte de nouveau.

17. Procédé selon l'une au moins des revendications 1 à 16, **caractérisé en ce que**, pour la réaction, on utilise des polymères du groupe des polyesters, des polycarbonates, des polyéthers, des polyacétals, des résines époxydes, des polylactones, des polylactides, des polyglycolides, des polyacrylates, du poly(acétate de vinyle), des biopolymères, du bois, de la cellulose, de la lignine, de la cutine et de la pectine.

18. Procédé selon l'une au moins des revendications 1 à 17, **caractérisé en ce que** l'on utilise des polymères qui contiennent encore d'autres composants comme des fibres de renfort, des charges, des additifs habituels, ou qui se présentent comme produits composites.

19. Procédé selon l'une au moins des revendications 1 à 18, **caractérisé en ce que** de l'oxygène est ajouté à la matière fondue sous forme libre ou liée, en particulier pour des polymères dans lesquels le rapport des atomes d'oxygène aux atomes de carbone est inférieur à 1 et qui nécessitent de l'oxygène pour une oxydation totale des atomes de carbone, l'oxygène sous forme libre étant introduit en dessous de la surface de la matière fondue et l'oxygène sous forme liée étant introduit au-dessus ou en dessous de la surface de la matière fondue,

20. Procédé selon la revendication 19, **caractérisé en ce que** l'on introduit l'oxygène lié sous forme d'acide formique, d'acide oxalique, d'eau ou de dioxyde de carbone.

21. Procédé selon l'une au moins des revendications 1 à 20, **caractérisé en ce que** l'on exécute le procédé continûment.

22. Dispositif pour l'exécution d'un procédé selon l'une des revendications 1 à 21, **caractérisé en ce que** le dispositif comprend un réacteur (1) pour la réception des composés devant réagir et pour l'exécution de la réaction, de même qu'un dispositif (2) pour mélanger ou pour disperser les produits en réaction, un récipient de réserve (5) pour la réception de l'hydroxyde alcalin, de même qu'une conduite d'amenée (4) servant à acheminer l'hydroxyde alcalin dans le réacteur, un récipient de réserve (7) pour la réception des polymères et une conduite d'amenée (6) servant à acheminer les polymères dans le réacteur, une conduite d'évacuation (8) pour évacuer l'hydrogène produit, un dispositif (9) pour le transport du carbonate alcalin produit, via une conduite d'évacuation (10), dans un récipient de réserve (11), un dispositif (12) ainsi que des conduites d'amenée (14a - e) pour l'acheminement de gaz inerte en vue de chasser l'oxygène de l'espace (3) dans le réacteur au-dessus de la surface de la matière fondue et dans les récipients de réserve (5) et (7), ainsi que dans les conduites correspondantes (4) et (6).

23. Dispositif selon la revendication 22, **caractérisé en ce que** le réacteur est doté d'un système combiné de chauffage et de refroidissement qui fonctionne à l'aide de fluides caloporteurs ou de dispositifs électriques et qui permet une récupération de la chaleur.

24. Dispositif selon la revendication 22 ou 23, **caractérisé en ce que** le réacteur comporte une conduite d'amenée (13) servant à introduire de l'oxygène libre ou lié en dessous de la surface de la matière fondue (3).
